# EUROPEAN PATENT APPLICATION

(11) **EP 1 109 044 A1**
(43) Date of publication of application: **20.06.2001**
(21) Application number: 00204229.9
(22) Date of filing: 28.11.2000
(51) Int. Cl.: G02B 6/44

(54) **Optical fibre management unit**

(30) Priority: 16.12.1999 GB 9930005
(71) Applicant: Tyco Electronics Raychem NV, 3010 Kessel-lo (BE)
(72) Inventor: Wambeke, Alain, 3440 Zoutleeuw (BE); Thijs, Danny, 3520 Zonhoven (BE); Peeters, Erik, 3001 Heverlee (BE)
(74) Representative: Beitsma, Gerhard Romano

(57) **Abstract**

A shelf (1) for optical fibre management comprises a base plate (2) for accommodating a plurality of fibre overlength storage containers (3) and fastening means (4) for fastening the containers (3) to the base plate (2). According to the invention, the fastening means (4) are constituted by at least a first fastening pad fixed to the base plate (2) and second fastening pads fixed to the individual containers (3), the fastening pads being designed so as to provide a releasable bond. Preferably, the pads together constitute a "touch-to close" fastener for example of the type known under the Trade Mark "VELCRO". Thus the storage containers can be easily arranged in stacks.

## Description

The present invention relates to a unit for optical fibre management. More in particular, the present invention relates to a shelf for optical fibre management, comprising a base plate for accommodating a plurality of fibre overlength storage containers and fastening means for fastening the storage containers to the baseplate.

Such units are used in optical fibre management racks for overlength storage, that is, for storing spare lengths of optical fibre in an orderly and accessible manner.

Optical fibre overlengths are required to allow adaptations to be made to the fibre arrangements after installation. In order to be able to exchange connections within a rack some cable slack must be present or some positions in the rack cannot be reached. Also, in order to make new splices or to attach new connectors it is often necessary to cut off a small length of the fibre, thus requiring spare length. It will be understood that the term "optical fibres" is used here to refer to both single fibres and multiple fibres, including optical fibre cables each comprising a plurality of optical fibres.

It has previously been proposed in International Patent Application WO 00/52509 (Raychem) to store lengths of fibres (or fibre cables, e.g. so-called "pigtails" or "jumpers") in individual containers, each container storing a single loop of fibre. The containers of said Patent Application are flat and are preferably made of flexible plastic.

In the fibre management shelves described in the above-mentioned International Patent Application the containers are arranged in a row, each container being vertically positioned in a respective slot. It will be understood that the minimum bend radius of optical fibres imposes a minimum width on the containers. Consequently, the vertical arrangement causes the shelf to have a certain minimum height. In some racks, a smaller height is desired, which would require to arrange the containers horizontally rather than vertically.

A horizontal arrangement of the containers, however, creates the problem of providing a secure yet releaseable fixing of the containers in the shelf. The containers should stay in place when the shelf is handled but should be easy to detach and rearrange should the need arise. The slots used for the vertical arrangement do not offer a practical solution to this problem.

The present invention seeks to solve this problem and to provide a fibre management unit in which storage containers can be releasably secured irrespective of their orientation. The present invention further seeks to provide a fibre management unit which is both practical and economical.

The present invention also seeks to provide a practical storage container which allows easy securing in various orientations, as well as an optical fibre management rack provided with compact yet easily manageable storage facilities.

A shelf as defined in the preamble is therefore, according to the present invention, characterised in that the fastening means are constituted by at least one first fastening pad fixed to the baseplate and second fastening pads fixed to the individual containers, the first and second fastening pads being designed so as to provide a releaseable bond.

Fastening pads providing a releasable bond allow containers to be fitted in the shelf and be held in place without the need for slots, hooks or other mechanical means. In addition, a container may be fitted in any desired position on the first pad, thus allowing a great measure of flexibility. The releasable bond allows the containers to be rearranged within the unit or even to be removed from the unit.

Preferably, the first fastening pad and at least one second fastening pad together comprise a "touch-to-close" fastener, preferably of the type known under the Trade Mark "VELCRO". "VELCRO" type pads provide an ideal releasable bond. The actual "VELCRO" pad having hooks preferably constitutes the first fastening pad fitted on the base plate, the counterpart cloth or other material (possibly having a "mushroom" design) constituting the second fastening pads fitted onto the containers. A reverse design, however, is also possible.

Alternatively, the first fastening pad comprises an adhesive strip. The adhesive strip may have a layer of glue or a similar adhesive for providing a firm but non-permanent bond. The releasable bond ensures that the fitted containers may be relocated within or removed from the unit. In such an embodiment, the second fastening pads are integral with a face of each container, preferably its bottom surface. That is, no separate second pads are provided. This allows a simpler and more economical design of the fastening means.

Advantageously, at least one first fastening pad extends substantially transversely to the longitudinal axis of the shelf. Alternatively, or additionally, a first fastening pad covers substantially the entire base plate. This allows the containers to be placed in virtually any position along the width of the unit.

In order to allow a stable stacked arrangement of horizontal containers, the containers are preferably provided with a first fastening pad on their top surfaces and a second fastening pad on their bottom surfaces.

Preferably, the containers are provided with first and second ridges extending from their top and bottom surfaces respectively. Such ridges are advantageously corresponding, that is, the top ridges of a container support the bottom ridges of the container above it, thus defining the height of the container stack.

In order to use the available space most economically, the ridges extend from the said surfaces over a distance which is at most equal to the thickness of the fastening pads. By making the sum of the heights of the ridges, which also define the spacing between the co-operating pads, slightly lower than the sum of heights of the pads, a good fixing action of the pads is achieved while obtaining a very compact structure.

The invention further provides a storage container having at least one fastening pad for use in a shelf as described above, and a rack for optical fibre management in which a shelf as described above is applied.

The invention will further be explained below by way of an exemplary, non-limiting embodiment shown in the accompanying drawings, in which:
Figure 1 shows, in top view, a first embodiment of an optical fibre shelf according to the present invention;
Figure 2 schematically shows, in cross-section, a stack of storage containers in the shelf of Fig. 1;
Figure 3 shows, in top view, the base plate of the shelf of Fig. 1;
Figures 4a and 4b schematically show, in perspective, fastening pads, for use in the shelf of Fig. 1; and
Figure 5 schematically shows, in front view, a rack in which the shelf of Fig. 1 is applied.

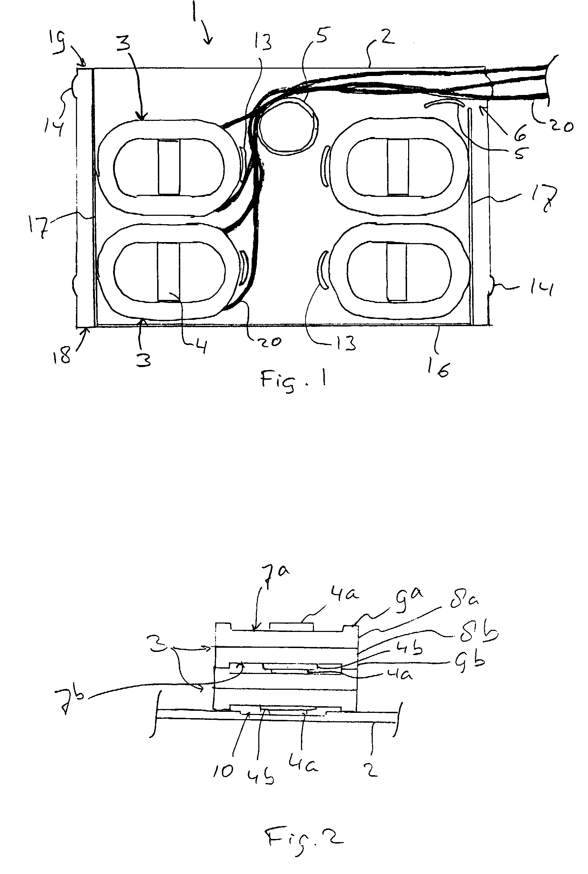

The optical fibre management shelf 1 schematically shown in Fig. 1 comprises a base plate 2 on which storage containers 3 and bend control members 5 are mounted. Optical fibre cables 20 enter the shelf through a port 6 and are guided by the bend control members 5 towards the individual storage containers 3. As those skilled in the art will appreciate, bend control members 5 provide a bending radius which is at least equal to the minimum bending radius of the optical fibres.

Retainers 13 aid to position the storage containers 3 and provide additional bend control. They also improve the cable retention of the shelf by providing pull resistance.

The base plate 2 is further provided with a front wall 16 at its front edge 18. At least one of the side walls 17 is provided with a cable port 6. In the embodiment shown no back wall is provided at the rear edge 19.

The shelf 1 is preferably designed to be used as a drawer so it can be pulled forward to provide access to the cables 20 and containers 3. To facilitate any sliding movement within its housing (not shown) the base plate 2 is provided with protrusions 14.

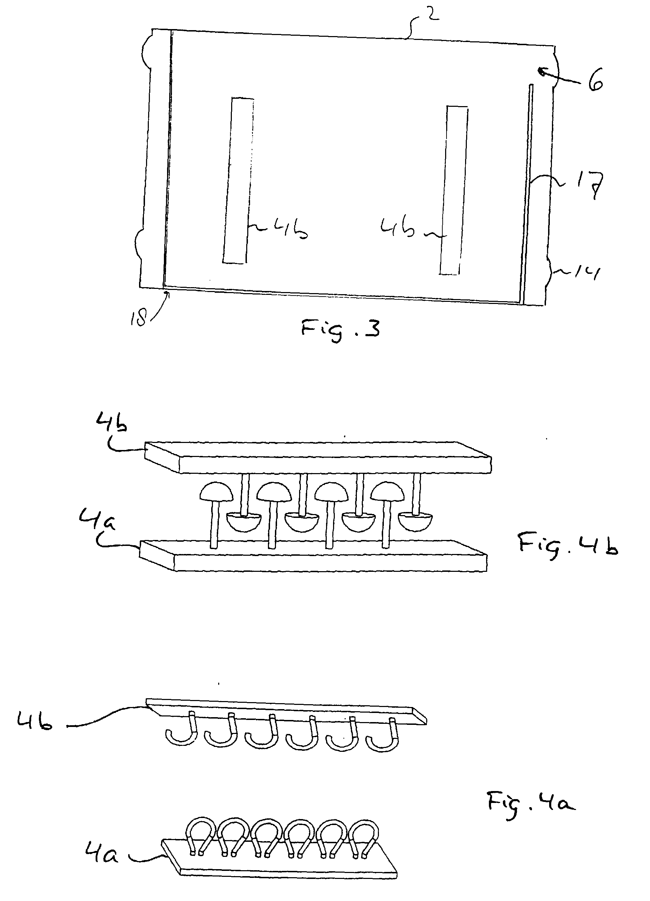

As can be seen in Fig. 1, the containers 3 are, in this embodiment, arranged in four stacks. Different arrangements are of course also possible, such as two, three or six different stacks. The containers 3 are provided with fastening means 4, as will be further explained with reference to Fig. 2.

As shown in Fig. 2, each container 3 may consist of two container halves 8a and 8b, each having a top surface 7a and a bottom surface 7b. On each top surface 7a a first fastening pad 4a is attached, while a second fastening pad 4b is affixed to each bottom surface 7b.

Ridges 9a and 9b extend from surfaces 7a and 7b respectively to provide sufficient space for the pads 4a and 4b. To this end, the base plate 2 may be provided with a recess 10 or a ridge (not shown). The spacing provided by the ridges 9a and 9b and the recess 10 accommodates the combined heights of the pairs of pads 4a and 4b.

If an adhesive or an adhesive tape is used, the second fastening pads 4b may be omitted, the bottom surfaces 7b and/or the ridges 9b of the containers 3 constituting the "pads".

As shown in Fig. 3, the second fastening pads 4b fixed on the base plate 2 may extend transversely to the longitudinal axis (that is, parallel to the side walls 17) of the shelf 1. However, other arrangements are also possible, such as covering substantially the entire base plate 2 with a single pad 4b or a plurality of pads 4b.

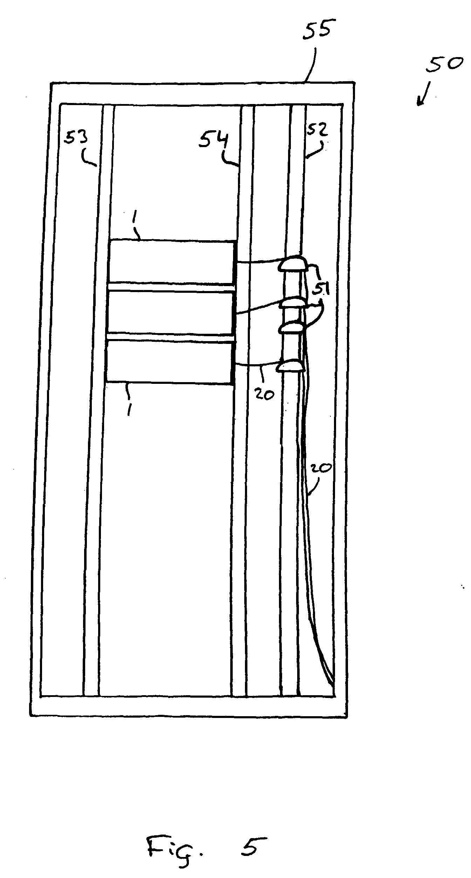

In a very advantageous embodiment of the present invention, the fastening pads 4 are constituted by a "touch-to-close" fastener, preferably of type known under the Trade Mark "VELCRO". Such a fastener is shown enlarged and in more detail in figures 4a and 4b. The first fastening pad 4a may be a pad or cloth having looplets, while the second fastening pad 4b may be a "VELCRO" pad proper having hooklets, as shown in Fig 4a. Alternatively, compatible "mushroom" pads 4a and 4b may be used, as shown in Fig. 4b. Such an arrangement provides an instantaneous and solid yet releasable bond. The containers can be fitted by merely pushing them into place. On the other hand, fitted containers may be removed by just pulling them from the tray. This provides a very simple and efficient fitting technique. Still, the bond obtained with "VELCRO" type fastening pads has proved to be resistant to vibrations and other movements.

The optical fibre management rack 40 schematically shown in Fig. 5 comprises a frame 55 in which vertical bars 52-54 are fitted. Optical fibre management units constituted by shelves 1 are mounted on the bars 53 and 54. Vertical bar 52 serves to mount cable guide spools 51. Optical fibre cables 20 are supported arid guided by the spools 51. Advantageously, the shelves 1 are provided with fastening means according to the present invention for fastening overlength storage containers.

It will be understood by those skilled in the art that the present invention is not limited to the embodiments illustrated above and that many modifications and additions are possible without departing from the scope of the present invention.

## Claims

1. Shelf (1) for optical fibre management, comprising a base plate (2) for accommodating a plurality of fibre overlength storage containers (3) and fastening means (4) for fastening the storage containers to the base plate (2),
**characterised in that** the fastening means (4) are constituted by at least one first fastening pad (4a) fixed to the base plate (2) and second fastening pads (4b) fixed to the individual containers (3), the first and second fastening pads being designed so as to provide a releaseable bond.

2. Shelf according to claim 1, wherein the first fastening pad (4a) and at least one second fastening pad (4b) together comprise a "touch-to-close" fastener, preferably of the type known under the Trade Mark "VELCRO".

3. Shelf according to claim 1, wherein the first fastening pad (4a) comprises an adhesive strip.

4. Shelf according to claim 3, wherein the second fastening pads (4b) are integral with a face of each container (3), preferably its bottom surface (7b).

5. Shelf according to any of the preceding claims, wherein at least one first fastening pad (4a) extends substantially transversely to the longitudinal axis of the shelf (1).

6. Shelf according to any of the preceding claims, wherein a first fastening pad (4a) covers substantially the entire base plate (2).

7. Shelf according to any of the preceding claims, wherein at least some of the containers (3) are provided with a first fastening pad (4a) on their top surfaces (7a) and a second fastening pad (4b) on their bottom surfaces (7b).

8. Shelf according to any of the preceding claims, wherein at least some of the containers (3) are provided with first and second ridges (9a, 9b) extending from their top and bottom surfaces (7a, 7b) respectively.

9. Shelf according to claims 7 and 8, wherein the ridges (9a, 9b) extend from the said surfaces (7a, 7b) over a distance which is at most equal to the thickness of the fastening pads (4a, 4b).

10. Cable organising cabinet (50), provided with a shelf (1) according to any of the preceding claims.

11. Container (3) for storing fibre overlength for use in a shelf (1) according to any of claims 1-9.
